# EUROPEAN PATENT APPLICATION

(11) **EP 4 654 658 A1**
(43) Date of publication of application: **26.11.2025**
(21) Application number: 23916671.3
(22) Date of filing: 16.01.2023
(51) Int. Cl.: H04W 28/00

(54) **PROTOCOL DATA UNIT (PDU) PROCESSING METHODS AND APPARATUSES**

(71) Applicant: Beijing Xiaomi Mobile Software Co., Ltd., Beijing 100085 (CN)
(72) Inventor: LI, Yanhua, Beijing 100085 (CN); WU, Jinhua, Beijing 100085 (CN)
(74) Representative: Dehns Germany Partnerschaft mbB
(86) International application number: PCT/CN2023/072472
(87) International publication number: WO 2024/152180

(57) **Abstract**

Disclosed in the embodiments of the present application are protocol data unit (PDU) processing methods and apparatuses. By receiving quality of service (QoS) information sent by a second network device, the QoS information having an association relationship with a PDU set; and, according to the QoS information, processing the PDU set associated with the QoS information and/or a PDU in the PDU set, a first network device can support in a wireless access network QoS processing of the protocol data unit set, can regulate and control network traffic, avoids and manages network congestion, and reduces message packet loss rates, effectively improving the reliability of system communication.

## Description

### TECHNICAL FIELD

The disclosure relates to the field of communication technology, and in particular to a method and an apparatus for processing a protocol data unit (PDU).

### BACKGROUND

In the current 5G system, a quality of service (QoS) flow is a minimum granularity for QoS distinction in a protocol data unit (PDU), and each data packet in the QoS flow is processed according to the same QoS requirement.

For extended reality (XR) or media services, a group of data packets may be used to carry a payload (e.g., a frame, video slice/texture) of a PDU set. At a media access control (MAC) layer, data packets in the PDU set are decoded or processed as a whole. However, in the related art, in a radio access network (RAN) with a non-separated architecture or a separated architecture, or in a dual connectivity (DC) scenario, QoS processing of the PDU set has not yet been supported.

### SUMMARY

An embodiment of a first aspect of the disclosure provides a method for processing a protocol data unit (PDU), performed by a first network device. The method includes: receiving quality of service (QoS) information sent by a second network device, in which, an association between the QoS information and a PDU set is present; and processing, according to the QoS information, a PDU set associated with the QoS information and/or a PDU within the PDU set associated with the QoS information.

An embodiment of a second aspect of the disclosure provides a method for processing a protocol data unit (PDU), performed by a second network device. The method includes: sending quality of service (QoS) information to a first network device, in which, an association between the QoS information and a PDU set is present; in which, the QoS information is configured for the first network device to process, according to the QoS information, a PDU set associated with the QoS information and/or a PDU within the PDU set associated with the QoS information.

An embodiment of a third aspect of the disclosure provides an apparatus for processing a protocol data unit (PDU), applied to a first network device. The apparatus includes: a transceiver unit, configured to receive quality of service (QoS) information sent by a second network device, in which, an association between the QoS information and a PDU set is present; and a processing unit, configured to process, according to the QoS information, a PDU set associated with the QoS information and/or a PDU within the PDU set associated with the QoS information.

An embodiment of a fourth aspect of the disclosure provides an apparatus for processing a protocol data unit (PDU), applied to a second network device. The apparatus includes: a transceiver unit, configured to send quality of service (QoS) information to a first network device, in which, an association between the QoS information and a PDU set is present; in which, the QoS information is configured for the first network device to process, according to the QoS information, a PDU set associated with the QoS information and/or a PDU within the PDU set associated with the QoS information.

An embodiment of a fifth aspect of the disclosure provides a communication device. The communication device includes a processor and a memory, in which the memory stores a computer program, which, when executed by the processor, causes the device to implement the method for processing the PDU of the embodiment of the first aspect.

An embodiment of a sixth aspect of the disclosure provides a communication device. The communication device includes a processor and a memory, in which the memory stores a computer program, which, when executed by the processor, causes the device to implement the method for processing the PDU of the embodiment of the second aspect.

An embodiment of a seventh aspect of the disclosure provides a communication device. The communication device includes a processor and an interface circuit; in which the interface circuit is configured to receive code instructions and transmit the code instructions to the processor; and the processor is configured to execute the code instructions, causing the device to implement the method for processing the PDU of the embodiment of the first aspect.

An embodiment of an eighth aspect of the disclosure provides a communication device. The communication device includes a processor and an interface circuit; in which the interface circuit is configured to receive code instructions and transmit the code instructions to the processor; and the processor is configured to execute the code instructions, causing the device to implement the method for processing the PDU of the embodiment of the second aspect.

An embodiment of a ninth aspect of the disclosure provides a computer-readable storage medium. The computer-readable storage medium is configured to store instructions, in which, when the instructions are executed, the method for processing the PDU of the embodiment of the first aspect is implemented.

An embodiment of a tenth aspect of the disclosure provides a computer-readable storage medium. The computer-readable storage medium is configured to store instructions, in which, when the instructions are executed, the method for processing the PDU of the embodiment of the second aspect is implemented.

An embodiment of an eleventh aspect of the disclosure provides a computer program that, when running on a computer, causes the computer to perform the method for processing the PDU of the embodiment of the first aspect.

An embodiment of a twelfth aspect of the disclosure provides a computer program that, when running on a computer, causes the computer to perform the method for processing the PDU of the embodiment of the second aspect.

Embodiments of the disclosure provide the method and the apparatus for processing the PDU. The QoS information sent by the second network device is received, in which, the association between the QoS information and the PDU set is present, and the PDU set associated with the QoS information and/or the PDU within the PDU set are processed according to the QoS information, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications.

Additional aspects and advantages of embodiments of the disclosure will be given in part in the following descriptions, become apparent in part from the following descriptions, or be learned from the practice of the embodiments of the disclosure.

### BRIEF DESCRIPTION OF THE DRAWINGS

In order to explain technical solutions in the embodiments of the disclosure or the related art more clearly, the figures described in the embodiments of the disclosure or required in the related art will be briefly introduced below.
FIG. 1a is a schematic diagram illustrating an RAN separated architecture according to an embodiment of the disclosure.
FIG. 1b is a schematic diagram illustrating a mapping relationship between a QoS flow and a DRB in a dual connectivity scenario according to an embodiment of the disclosure.
FIG. 2 is a flow chart illustrating a method for processing a PDU according to an embodiment of the disclosure.
FIG. 3 is a flow chart illustrating a method for processing a PDU according to an embodiment of the disclosure.
FIG. 4 is a schematic diagram illustrating a method for processing a PDU according to an embodiment of the disclosure.
FIG. 5 is a flow chart illustrating a method for processing a PDU according to an embodiment of the disclosure.
FIG. 6 is a flow chart illustrating a method for processing a PDU according to an embodiment of the disclosure.
FIG. 7 is a block diagram illustrating an apparatus for processing a PDU according to an embodiment of the disclosure.
FIG. 8 is a block diagram illustrating an apparatus for processing a PDU according to an embodiment of the disclosure.
FIG. 9 is a block diagram illustrating an apparatus for processing a PDU according to an embodiment of the disclosure.
FIG. 10 is a block diagram illustrating a chip according to an embodiment of the disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be interpreted as "when" or "upon" or "in response to determining" depending on the context.

Embodiments of the disclosure are described in detail below, and examples of the embodiments are illustrated in the accompanying figures, in which the same or similar symbols from beginning to end indicate the same or similar elements. The embodiments described below by reference to the accompanying figures are exemplary and are intended to be used to explain the disclosure and are not to be construed as a limitation of the disclosure.

In order to better understand a method for processing a protocol data unit (PDU) in embodiments of the disclosure, a communication system to which embodiments of the disclosure are applicable is described below.

It should to be noted that the technical solution in embodiments of the disclosure may be applicable for various communication systems, for example, a long term evolution (LTE) system, a 5th generation (5G) mobile communication system, a 5G new radio (NR) system or other future new mobile communication systems.

The first network device, the second network device, the third network device, and the fourth network device in embodiments of the disclosure are an entity for transmitting or receiving a signal at a network side. For example, a network device 101 may be an evolved NodeB (eNB), a transmission reception point (TRP), a next generation NodeB (gNB) in a NR system, a base station in other future mobile communication systems, or an access node in a wireless fidelity (Wi-Fi) system. A specific technology and a specific device form used by the network device are not limited in embodiments of the disclosure. The network device according to embodiments of the disclosure may consist of a central unit (CU) and a distributed unit (DU). The CU may also be referred to as a control unit. A protocol layer of a network device such as a base station may be split by using a CU-DU structure, so that functions for a part of the protocol layer are placed in the CU for centralized control, and functions of a remaining part or all of the protocol layers are distributed in the DU, and the DU is centrally controlled by the CU.

A terminal in embodiments of the disclosure is an entity for receiving or transmitting a signal at a user side, for example, a mobile phone. The terminal may be referred to as a terminal device, a user equipment (UE), a mobile station (MS), a mobile terminal (MT), etc. The terminal may be an automobile with a communication function, a smart automobile, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology used by the terminal and a specific device form of the terminal are not limited in embodiments of the disclosure.

In the current 5G system, a quality of service (QoS) flow is a minimum granularity for QoS distinction in a protocol data unit (PDU), and each data packet in the QoS flow is processed according to the same QoS requirement.

For extended reality (XR) or media services, a group of data packets may be used to carry a payload (e.g., a frame, video slice/texture) of a PDU set. At a media access control (MAC) layer, data packets in the PDU set are decoded or processed as a whole. For example, a frame can only be decoded if all or a certain number of packets carrying the frame are successfully sent. Therefore, the packets in the PDU set have an inherent correlation at the MAC layer.

However, in the related art, in a radio access network (RAN) with a non-separated architecture or a separated architecture, or in a dual connectivity (DC) scenario, QoS processing of the PDU set has not been supported yet.

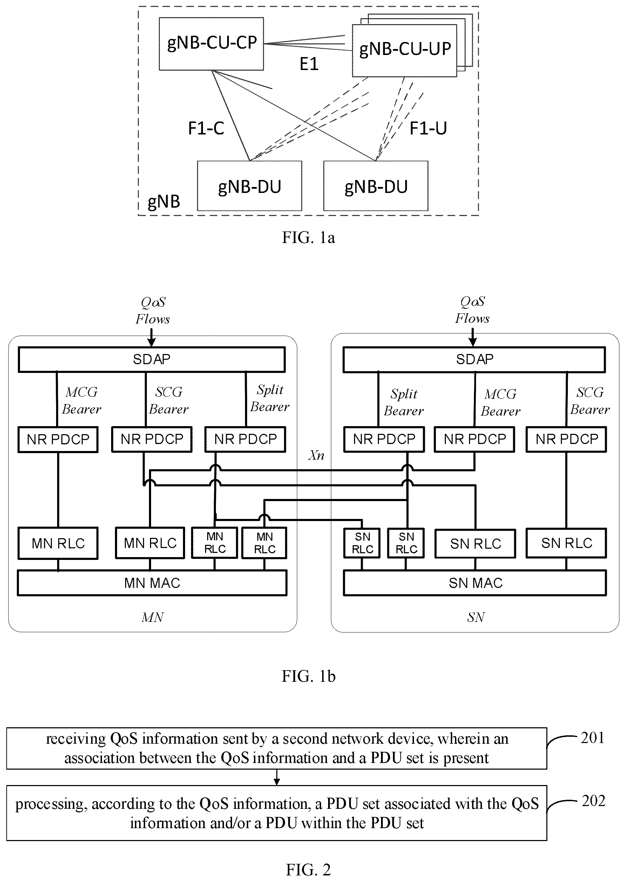

FIG. 1a is a schematic diagram illustrating an RAN separated architecture according to an embodiment of the disclosure. A gNB-CU-CP (gNB-central unit-control plane) is responsible for RRC (radio resources control) and PDCP (packet data convergence protocol) control plane functions. A gNB-CU-UP (gNB-central unit-user plane) is responsible for GTP-U (GPRS (general packet radio service) tunneling protocol-user plane), SDAP (service data adaptation protocol) and PDCP user plane functions. A gNB-DU (gNB-distributed unit) is responsible for RLC (radio link control), MAC (medium access control) and PHY (physical layer) functions.

A schematic diagram illustrating a mapping relationship between a QoS flow and a DRB (data radio bearer) in a dual connectivity scenario is shown in FIG. 1b. Terms involved are explained as follows:
MN: Master Node;
SN: Secondary node;
MCG: Master Cell Group;
SCG: Secondary Cell Group;
MCG Bearer;
SCG Bearer;
Split Bearer.

It may be understood that a communication system described in embodiments of the disclosure is intended to explain technical solutions of embodiments of the disclosure more clearly, and does not constitute a limitation to the technical solutions provided by embodiments of the disclosure. Those skilled in the art know that, with evolution of a system architecture and emergence of a new business scenario, the technical solutions provided in embodiments of the disclosure are equally applied to similar technical problems.

A method and an apparatus for processing a PDU in the disclosure are introduced in detail below in combination with the accompanying drawings.

Referring to FIG. 2, FIG. 2 is a flow chart illustrating a method for processing a PDU according to an embodiment of the disclosure. It should be noted that the method for processing a PDU in embodiments of the disclosure is performed by a first network device. The method may be performed independently or may be performed in conjunction with any other embodiments of the disclosure. As shown in FIG. 2, the method may include the following steps.

At step 201, QoS information sent by a second network device is received, in which, an association between the QoS information and a PDU set is present.

In an embodiment of the present disclosure, the first network device can receive the QoS information sent by the second network device, and there is an association between the QoS information and a PDU set to be processed by the first network device. It should be understood that the presence of the association between the QoS information and the PDU set may indicate that there is a specific correspondence between the QoS information and the PDU set.

For example, there may be a correspondence between the QoS information and at least one of the following items:
a PDU set;
a type of the PDU set;
a PDU in the PDU set;
importance or priority of the PDU set;
a QoS flow; or
a sub-QoS flow.

That is, each PDU set may correspond to its respective QoS information, or each type of the PDU set may correspond to its respective QoS information, or each PDU may correspond to its respective QoS information, or importance or priority of each PDU set may correspond to its respective QoS information, or each QoS flow or each sub-QoS flow may correspond to its respective QoS information, etc.

In some embodiments of the present disclosure, the QoS information may be specific to per PDU set, that is, each PDU set has its respective QoS information. The QoS information may be determined by the second network device based on different PDU sets. After obtaining the QoS information, the first network device may process, based on the QoS information, the PDU set corresponding to the QoS information.

In some embodiments of the present disclosure, the QoS information may be specific to per PDU set type, that is, each type of the PDU set has its respective QoS information. The QoS information may be determined by the second network device based on different PDU set types. After obtaining the QoS information, the first network device may process, based on the QoS information, the PDU set with a type belonging to a PDU set type corresponding to the QoS information.

In some embodiments of the present disclosure, the QoS information may be specific to per PDU, that is, each PDU has its respective QoS information. The QoS information may be determined by the second network device based on different PDUs. After obtaining the QoS information, the first network device may process, based on the QoS information, the PDU set to which the PDU corresponding to the QoS information belongs.

In some embodiments of the present disclosure, the QoS information may be specific to per PDU set importance/priority, that is, PDU sets with different importance or priorities have their respective QoS information. The QoS information may be determined by the second network device based on different PDU set importance/priorities. After obtaining the QoS information, the first network device may process, based on the QoS information, the PDU set with importance/priority belonging to importance/priority corresponding to the QoS information.

In some embodiments of the present disclosure, the QoS information may be specific to per QoS flow, that is, each QoS flow has its respective QoS information. One QoS flow may include one or more PDU sets. The QoS information may be determined by the second network device based on different QoS flows. After obtaining the QoS information, the first network device may process, based on the QoS information, the PDU set in a QoS flow corresponding to the QoS information.

In some embodiments of the present disclosure, the QoS information may be specific to per sub-QoS flow, that is, each sub-QoS flow has its respective QoS information. One QoS flow may include one or more sub-QoS flows, and each sub-QoS flow corresponds to one type of PDU set. The QoS information may be determined by the second network device based on different sub-QoS flows. After obtaining the QoS information, the first network device may process, based on the QoS information, the PDU set associated with a sub-QoS flow corresponding to the QoS information.

As an example, the QoS information includes a QoS parameter, and corresponds to the importance of the PDU set (PDU set importance), that is, different QoS parameters may be set for different PDU set importance. For example, for importance 0 (PDU set importance 0), a QoS parameter corresponding to the importance 0 may include PSER (PDU set error rate), which, for example, may be 5%, PSDB (PDU set delay budget), which, for example, may be 10ms, and PSII (PDU set integrated indication), which, for example, may be a value of 1. It is understandable that the above embodiments are only given as examples and are not taken as a limitation on the QoS parameter in embodiments of the present disclosure. The QoS parameter may be flexibly set according to an actual application situation, which will not be limited in the present disclosure. The first network device can process a PDU set of importance 0 according to the QoS information.

It should be noted that, in the embodiment of the present disclosure, processing the PDU set includes: processing the PDU set, and/or processing the PDU in the PDU set.

For example, the type of the PDU set may be a frame type (such as an intra-coded frame namely I frame, a forward predictive-coded frame namely P frame, etc.), or may be a service type, or may be other PDU set types, etc., which is not limited herein in the disclosure.

In an embodiment of the present disclosure, the QoS information sent by the second network device to the first network device is communicated based on a user plane protocol and/or a control plane protocol.

The QoS information communicated based on the user plane protocol is determined based on a QoS measurement result obtained by the second network device performing QoS measurement related to the PDU set. The QoS information communicated based on the control plane protocol may be a QoS parameter.

As a possible implementation, the first network device may be a gNB-DU, the second network device may be a gNB-CU-UP, and the QoS information may be included in an NR user plane protocol frame sent by the gNB-CU-UP (second network device) to the gNB-DU (first network device).

As another possible implementation, the first network device may be the gNB-CU-UP, the second network device may be the gNB-DU, and the QoS information may be included in an NR user plane protocol frame sent by the gNB-DU (second network device) to the gNB-CU-UP (first network device).

As another possible implementation, the first network device may be the gNB-DU, the second network device may be a gNB-CU or a gNB-CU-CP, and the QoS information may be included in an F1AP (F1 application protocol) message sent by the gNB-CU or the gNB-CU-CP (second network device) to the gNB-DU (first network device).

As another possible implementation, the first network device may be the gNB-CU or the gNB-CU-CP, the second network device may be the gNB-DU, and the QoS information may be included in an F1AP message sent by the gNB-DU (second network device) to the gNB-CU or gNB-CU-CP (first network device).

As another possible implementation, the first network device may be the gNB-CU-UP, the second network device may be the gNB-CU-CP, and the QoS information is included in an E1AP (E1 application protocol) message sent by the gNB-CU-CP (second network device) to the gNB-CU-UP (first network device).

As another possible implementation, the first network device may be the gNB-CU-CP, the second network device may be the gNB-CU-UP, and the QoS information is included in an E1AP message sent by the gNB-CU-UP (second network device) to the gNB-CU-CP (first network device).

As another possible implementation, the first network device may be an SN, the second network device may be an MN, and the QoS information may be included in an XnAP (Xn application protocol) message sent by the MN (second network device) to the SN (first network device).

As another possible implementation, the first network device may be the MN, the second network device may be the SN, and the QoS information may be included in an XnAP message sent by the SN (second network device) to the MN (first network device).

As another possible implementation, the first network device may be a destination base station during a handover procedure, and the second network device may be a source base station during the handover procedure. The QoS information is included in an XnAP message (for example, a handover request message) sent by the source base station (second network device) to the destination base station (first network device).

As another possible implementation, the first network device may be a base station, the second network device may be a core network node, and the QoS information is included in an NGAP (next generation application protocol) message or a GTP-U packet header sent by the core network node (second network device) to the base station (first network device).

In some implementations, the QoS information is communicated based on the user plane protocol, and the QoS information is determined based on the QoS measurement result obtained by the second network device performing the QoS measurement related to the PDU set.

For example, the QoS measurement related to the PDU set may include at least one of:
delay measurement;
error rate measurement; or
PDU set size measurement.

It is understandable that the second network device may also perform other QoS measurements related to the PDU set to obtain the QoS measurement result of the PDU set, such that the first network device processes the PDU set based on the measurement result. The content of performing the specific QoS measurement is not limited herein in the present disclosure.

Further, in some implementations, the first network device may send a QoS measurement request to the second network device. The QoS measurement request includes at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

For example, the predetermined condition may include that the QoS measurement result is higher than the first threshold value; or the predetermined condition may include that the QoS measurement result is equal to the first threshold value; or the predetermined condition may include that the QoS measurement result is less than the first threshold value.

For example, the first threshold value includes at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

It is understandable that the delay measurement result meeting the predetermined condition means that a comparison relationship between the delay measurement result and the first delay threshold value meets the predetermined condition. For example, the delay measurement result meeting the predetermined condition may include that the delay measurement result is higher than the first delay threshold value; or the delay measurement result meeting the predetermined condition may include that the delay measurement result is equal to the first delay threshold value; or the delay measurement result meeting the predetermined condition may include that the delay measurement result is less than the first delay threshold value.

Similarly, the error rate measurement result meeting the predetermined condition means that a comparison relationship between the error rate measurement result and the first error rate threshold value meets the predetermined condition. For example, the error rate measurement result meeting the predetermined condition may include that the error rate measurement result is higher than the first error rate threshold value; or the error rate measurement result meeting the predetermined condition may include that the error rate measurement result is equal to the first error rate threshold value; the error rate measurement result meeting the predetermined condition may include that the error rate measurement result is less than the first error rate threshold value.

The PDU set size measurement result meeting the predetermined condition means that a comparison relationship between the PDU set size measurement result and the first capacity threshold value meets the predetermined condition. For example, the PDU set size measurement result meeting the predetermined condition may include that the PDU set size measurement result is higher than the first capacity threshold value; or the PDU set size measurement result meeting the predetermined condition may include that the PDU set size measurement result is equal to the first capacity threshold value; or the PDU set size measurement result meeting the predetermined condition may include that the PDU set size measurement result is less than the first capacity threshold value.

In some implementations, the QoS measurement result is obtained by the second network device performing QoS measurement based on a QoS parameter sent by a third network device.

As a possible implementation, the third network device may be a gNB-CU-CP, the second network device may be a gNB-CU-UP, and the QoS parameter may be included in an E1AP message.

As another possible implementation, the third network device may be a core network node (for example, may be a UPF (user plane function)), the second network device may be a gNB-CU-UP or a base station (for example, may be a NG-RAN node), and the QoS parameter may be included in a GTP-U packet header.

In some implementations, the QoS information is communicated based on the control plane protocol, and the QoS information may be a QoS parameter.

For example, the QoS parameter includes error rate information related to the PDU set and/or delay budget information related to the PDU set.

For example, the error rate information related to the PDU set may include a PDU set error rate (PSER), and the delay budget information related to the PDU set may include a PDU set delay budget (PSDB).

It is noted that the PSER mentioned in embodiments of the present disclosure defines an upper limit of a ratio of the number of PDU sets that are not successfully received to the total number of PDU sets sent to a receiver within one measurement window. The PSDB defines an upper limit of a delay of one PDU set communicated between N6 termination points on the UE and the UPF, that is, a time from receiving the first PDU to successfully delivering the last arriving PDU.

It is understandable that the error rate information and the delay budget information may also use other measurement parameters, and the QoS parameter may also include other parameters (such as PDU set integrated indication (PSII), etc.), such that the first network device supports processing the PDU set. The content included in the QoS parameter is not limited in the disclosure.

It should be noted that the PSII is configured to indicate whether all PDUs in the PDU set are needed for the usage of PDU set by an application layer.

At step 202, a PDU set associated with the QoS information and/or a PDU within the PDU set are processed according to the QoS information.

In an embodiment of the present disclosure, the first network device can process the PDU set associated with the QoS information and/or the PDU within the PDU set according to the received QoS information.

In an embodiment of the present disclosure, the processing of the PDU set and/or the PDU by the first network device includes: scheduling and/or performing resource configuration on the PDU set and/or the PDU.

In some implementations, the first network device can receive a PDU sent by a fourth network device and process the PDU. The PDU belongs to the PDU set associated with the QoS information.

For example, the PDU sent by the fourth network device includes first indication information, and the first indication information may be configured to indicate at least one of the following information:
a type of the PDU set;
a sequence number of the PDU in the PDU set; or
an end marker of the PDU set.

As a possible implementation, the first network device may be the gNB-DU, the fourth network device may be the gNB-CU-UP, and the PDU may be included in an NR user plane protocol frame sent by the gNB-CU-UP to the gNB-DU.

As another possible implementation, the first network device may be a corresponding node, the fourth network device may be a PDCP host node, and the PDU may be included in an NR user plane protocol frame sent by the PDCP host node to the corresponding node. Specifically, the user plane protocol frame may be a downlink user data (DL USER DATA) frame. The corresponding node refers to a node interacting with a node hosting PDCP for flow control

It should be noted that in embodiments of the present disclosure, the first network device and the fourth network device are nodes with the user plane function, capable of communicating PDU data packets and processing the PDU data packets. The second network device that performs relevant QoS measurement may be a node with the user plane function or a node with the control plane function. The second network device that sends the QoS parameter and the third network device are nodes with the control plane function. In some embodiments, the third network device and the fourth network device may be the same node, while in other embodiments, the third network device and the fourth network device may also be different nodes.

In summary, the QoS information sent by the second network device is received, in which, the association between the QoS information and the PDU set is present, and the PDU set associated with the QoS information and/or the PDU within the PDU set are processed according to the QoS information, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

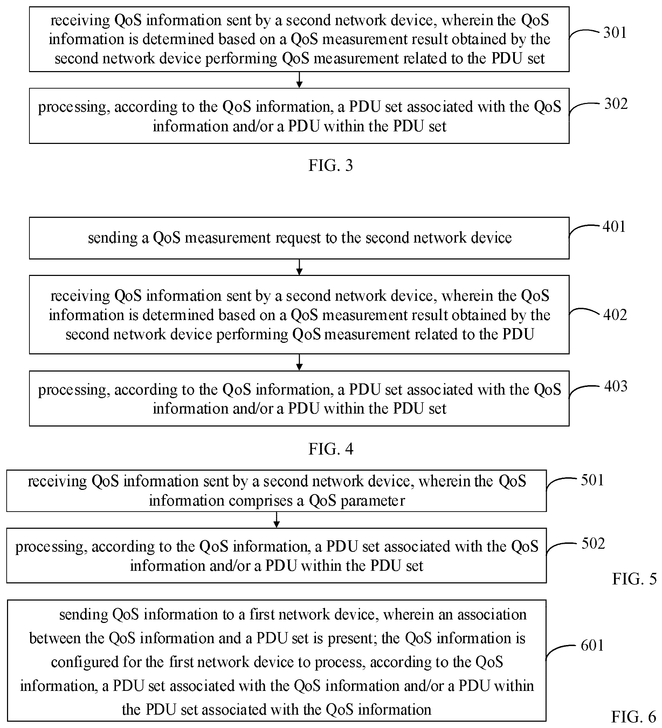

Referring to FIG. 3, FIG. 3 is a flow chart illustrating a method for processing a PDU according to an embodiment of the disclosure. It should be noted that the method for processing a PDU in embodiments of the disclosure is performed by a first network device. The method may be performed independently or may be performed in conjunction with any other embodiments of the disclosure. As shown in FIG. 3, the method may include the following steps.

At step 301, QoS information sent by a second network device is received, in which, the QoS information is determined based on a QoS measurement result obtained by the second network device performing QoS measurement related to the PDU set.

In an embodiment of the present disclosure, the first network device can receive the QoS information sent by the second network device. The QoS information is determined by the second network device based on the QoS measurement result, and the QoS measurement result is obtained by the second network device performing the QoS measurement related to the PDU set. There is an association between the QoS information and a PDU set. In some implementations, the QoS information may be the QoS measurement result.

For example, there may be a correspondence between the QoS information and at least one of the following items:
a PDU set;
a type of the PDU set;
a PDU in the PDU set;
importance or priority of the PDU set;
a QoS flow; or
a sub-QoS flow

That is, each PDU set may correspond to its respective QoS information, or each type of the PDU set may correspond to its respective QoS information, or each PDU may correspond to its respective QoS information, or importance or priority of each PDU set may correspond to its respective QoS information, or each QoS flow or each sub-QoS flow may correspond to its respective QoS information, etc.

In some embodiments of the present disclosure, the QoS information may be specific to per PDU set, that is, each PDU set has its respective QoS information. The QoS information may be determined by the second network device based on different PDU sets. After obtaining the QoS information, the first network device may process, based on the QoS information, the PDU set corresponding to the QoS information.

In some embodiments of the present disclosure, the QoS information may be specific to per PDU set type, that is, each type of the PDU set has its respective QoS information. The QoS information may be determined by the second network device based on different PDU set types. After obtaining the QoS information, the first network device may process, based on the QoS information, the PDU set with a type belonging to a PDU set type corresponding to the QoS information.

In some embodiments of the present disclosure, the QoS information may be specific to per PDU, that is, each PDU has its respective QoS information. The QoS information may be determined by the second network device based on different PDUs. After obtaining the QoS information, the first network device may process, based on the QoS information, the PDU set to which the PDU corresponding to the QoS information belongs.

In some embodiments of the present disclosure, the QoS information may be specific to per PDU set importance/priority, that is, PDU sets with different importance or priorities have their respective QoS information. The QoS information may be determined by the second network device based on different PDU set importance/priorities. After obtaining the QoS information, the first network device may process, based on the QoS information, the PDU set with importance/priority belonging to importance/priority corresponding to the QoS information.

In some embodiments of the present disclosure, the QoS information may be specific to per QoS flow, that is, each QoS flow has its respective QoS information. One QoS flow may include one or more PDU sets. The QoS information may be determined by the second network device based on different QoS flows. After obtaining the QoS information, the first network device may process, based on the QoS information, the PDU set in a QoS flow corresponding to the QoS information.

In some embodiments of the present disclosure, the QoS information may be specific to per sub-QoS flow, that is, each sub-QoS flow has its respective QoS information. One QoS flow may include one or more sub-QoS flows, and each sub-QoS flow corresponds to one type of PDU set. The QoS information may be determined by the second network device based on different sub-QoS flows. After obtaining the QoS information, the first network device may process, based on the QoS information, the PDU set associated with a sub-QoS flow corresponding to the QoS information.

As an example, the QoS information includes a QoS parameter, and corresponds to the importance of the PDU set (PDU set importance), that is, different QoS parameters may be set for different PDU set importance. For example, for importance 0 (PDU set importance 0), a QoS parameter corresponding to the importance 0 may include PSER (PDU set error rate), which, for example, may be 5%, PSDB (PDU set delay budget), which, for example, may be 10ms, and PSII (PDU set integrated indication), which, for example, may be a value of 1. It is understandable that the above embodiments are only given as examples and are not taken as a limitation on the QoS parameter in embodiments of the present disclosure. The QoS parameter may be flexibly set according to an actual application situation, which will not be limited in the present disclosure. The first network device can process a PDU set of importance 0 according to the QoS information.

It should be noted that, in the embodiment of the present disclosure, processing the PDU set includes: processing the PDU set, and/or processing the PDU in the PDU set.

For example, the type of the PDU set may be a frame type (such as an intra-coded frame namely I frame, a forward predictive-coded frame namely P frame, etc.), or may be a service type, or may be other PDU set types, etc., which is not limited herein in the disclosure.

For example, the QoS measurement related to the PDU set may include at least one of:
delay measurement;
error rate measurement; or
PDU set size measurement.

It is understandable that the second network device may also perform other QoS measurements related to the PDU set to obtain the QoS measurement result of the PDU set, such that the first network device processes the PDU set based on the measurement result. The content of performing the specific QoS measurement is not limited herein in the present disclosure.

In some implementations, the second network device performs delay measurement, and the QoS measurement result may be a remaining delay budget, capable of indicating a remaining time for communication of the PDU set or the PDU.

In some embodiments, the second network device performs the delay measurement, and the QoS measurement result may be delay budget indication information, capable of indicating a relationship between a remaining time for communication of the PDU set or the PDU and a predetermined threshold value (for example, may indicating that the remaining time is higher than the predetermined threshold value, or less than the predetermined threshold value, or not less than the predetermined threshold value, or not higher than the predetermined threshold value, etc.).

In some implementations, the second network device performs error rate measurement, and the QoS measurement result may be an error rate for communication of the PDU set.

In some embodiments, the second network device performs the error rate measurement, and the QoS measurement result may be error rate indication information, capable of indicating a relationship between an error rate for communication of the PDU set and a predetermined threshold value (for example, may indicating that the error rate is higher than the predetermined threshold value, or less than the predetermined threshold value, or not less than the predetermined threshold value, or not higher than the predetermined threshold value, etc.).

In some implementations, the second network device performs PDU set size measurement, and the QoS measurement result may be a PDU set size.

In some embodiments, the second network device performs the PDU set size measurement, and the QoS measurement result may be PDU set size indication information, capable of indicating a relationship between a PDU set size and a predetermined threshold value (for example, may indicating that the PDU set size is higher than the predetermined threshold value, or less than the predetermined threshold value, or not less than the predetermined threshold value, or not higher than the predetermined threshold value, etc.).

It should be noted that the PDU set size may refer to a sum of sizes of all PDUs included in one PDU set. Or the PDU set size may also refer to a sum of sizes of a first received PDU to a currently received PDU in the PDU set.

It is understandable that the predetermined threshold values in the above-mentioned implementations may be set as different values according to different implementations and specific application scenarios, which will not be limited in the present disclosure.

Further, the QoS information may be included in a DL USER DATA frame, or the QoS information may also be included in a DL DATA DELIVERY STATUS frame.

In some implementations, the QoS measurement result is obtained by the second network device performing QoS measurement related to the PDU set based on a QoS parameter sent by a third network device.

As a possible implementation, the third network device may be a gNB-CU-CP, the second network device may be a gNB-CU-UP, and the QoS parameter may be included in an E1AP message.

As another possible implementation, the third network device may be a core network node (for example, may be a UPF), the second network device may be a gNB-CU-UP or a base station (for example, may be a NG-RAN node), and the QoS parameter may be included in a GTP-U packet header.

For example, the QoS parameter includes error rate information related to the PDU set and/or delay budget information related to the PDU set.

For example, the error rate information related to the PDU set may include a PSER, and the delay budget information related to the PDU set may include a PSDB.

It is understandable that the error rate information and the delay budget information may also use other measurement parameters, and the QoS parameter may also include other parameters (such as PSII, etc.), such that the first network device supports processing the PDU set. The content included in the QoS parameter is not limited in the disclosure.

For example, there may be a correspondence between the QoS information and at least one of the following items: a PDU set; a type of the PDU set; a PDU; importance or priority of the PDU set; a QoS flow; or a sub-QoS flow.

In some implementations, the first network device may also send a QoS measurement request to the second network device.

At step 302, a PDU set associated with the QoS information and/or a PDU within the PDU set are processed according to the QoS information.

In an embodiment of the present disclosure, the first network device can process the PDU set associated with the QoS information and/or the PDU within the PDU set according to the received QoS information.

In an embodiment of the present disclosure, the processing of the PDU set and/or the PDU by the first network device includes: scheduling and/or performing resource configuration on the PDU set and/or the PDU.

In some implementations, the first network device can receive a PDU sent by a fourth network device and process the PDU. The PDU belongs to the PDU set associated with the QoS information.

For example, the PDU sent by the fourth network device includes first indication information, and the first indication information may be configured to indicate at least one of the following information:
a type of the PDU set;
a sequence number of the PDU in the PDU set; or
an end marker of the PDU set.

In summary, the QoS information sent by the second network device is received, in which, the QoS information is determined based on the QoS measurement result obtained by the second network device performing the QoS measurement related to the PDU set, and the PDU set associated with the QoS information and/or the PDU within the PDU set are processed according to the QoS information, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

Referring to FIG. 4, FIG. 4 is a flow chart illustrating a method for processing a PDU according to an embodiment of the disclosure. It should be noted that the method for processing a PDU in embodiments of the disclosure is performed by a first network device. The method may be performed independently or may be performed in conjunction with any other embodiments of the disclosure. As shown in FIG. 4, the method may include the following steps.

At step 401, a QoS measurement request is sent to a second network device.

In an embodiment of the present disclosure, the first network device may send the QoS measurement request to the second network device.

The QoS measurement request includes at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

For example, the measurement indication information may be a polling bit (for example, a value of 1 indicates requesting the measurement, or a value of 0 indicates requesting the measurement, etc.).

For example, the measurement indication information may be included in at least one of the following information: an UL USER DATA frame; a DL DATA DELIVERY STATUS frame; or an ASSISTANCE INFORMATION DATA frame.

Optionally, the content of the QoS measurement includes at least one of:
requesting the second network device to measure information related to the delay of the PDU set;
requesting the second network device to measure information related to the error rate of the PDU set; or
requesting the second network device to measure information related to the size of the PDU set.

For example, the predetermined condition may include that the QoS measurement result is higher than the first threshold value; or the predetermined condition may include that the QoS measurement result is equal to the first threshold value; or the predetermined condition may include that the QoS measurement result is less than the first threshold value.

For example, the first threshold value includes at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

It is understandable that the delay measurement result meeting the predetermined condition means that a comparison relationship between the delay measurement result and the first delay threshold value meets the predetermined condition. For example, the delay measurement result meeting the predetermined condition may include that the delay measurement result is higher than the first delay threshold value; or the delay measurement result meeting the predetermined condition may include that the delay measurement result is equal to the first delay threshold value; or the delay measurement result meeting the predetermined condition may include that the delay measurement result is less than the first delay threshold value.

Similarly, the error rate measurement result meeting the predetermined condition means that a comparison relationship between the error rate measurement result and the first error rate threshold value meets the predetermined condition. For example, the error rate measurement result meeting the predetermined condition may include that the error rate measurement result is higher than the first error rate threshold value; or the error rate measurement result meeting the predetermined condition may include that the error rate measurement result is equal to the first error rate threshold value; the error rate measurement result meeting the predetermined condition may include that the error rate measurement result is less than the first error rate threshold value.

The PDU set size measurement result meeting the predetermined condition means that a comparison relationship between the PDU set size measurement result and the first capacity threshold value meets the predetermined condition. For example, the PDU set size measurement result meeting the predetermined condition may include that the PDU set size measurement result is higher than the first capacity threshold value; or the PDU set size measurement result meeting the predetermined condition may include that the PDU set size measurement result is equal to the first capacity threshold value; or the PDU set size measurement result meeting the predetermined condition may include that the PDU set size measurement result is less than the first capacity threshold value.

For example, the first delay threshold value may be a PSDB, and the first error rate threshold value may be a PSER.

For example, the first threshold value may correspond to a PDU set or a type of a PDU set, that is, each PDU set may correspond to a respective first threshold value, or each type of the PDU set may correspond to a respective first threshold value, etc.

For example, the type of the PDU set may be a frame type (such as an intra-coded frame namely I frame, a forward predictive-coded frame namely P frame, etc.), or may be a service type, or may be other PDU set types, etc., which is not limited herein in the disclosure.

At step 402, QoS information sent by a second network device is received, in which, the QoS information is determined based on a QoS measurement result obtained by the second network device performing QoS measurement related to the PDU set.

In an embodiment of the present disclosure, the first network device can receive the QoS information sent by the second network device. The QoS information is determined by the second network device based on the QoS measurement result, and the QoS measurement result is obtained by the second network device performing the QoS measurement related to the PDU set. There is an association between the QoS information and a PDU set. In some implementations, the QoS information may be the QoS measurement result.

For example, there may be a correspondence between the QoS information and at least one of the following items:
a PDU set;
a type of the PDU set;
a PDU in the PDU set;
importance or priority of the PDU set;
a QoS flow; or
a sub-QoS flow.

That is, each PDU set may correspond to its respective QoS information, or a type of each PDU set may correspond to its respective QoS information, or each PDU may correspond to its respective QoS information, or importance or priority of each PDU set may correspond to its respective QoS information, or each QoS flow or each sub-QoS flow may correspond to its respective QoS information, etc.

In some implementations, each QoS flow may correspond to its respective QoS information, that is, the QoS information is provided as per QoS flow, and one QoS flow may include a plurality of types of PDU sets.

In some implementations, each sub-QoS flow may correspond to its respective QoS information, that is, the QoS information is provided as per sub-QoS flow, and one QoS flow may include a plurality of sub-QoS flows, and each sub-QoS flow corresponds to one type of PDU set.

For example, the QoS measurement related to the PDU set may include at least one of:
delay measurement;
error rate measurement; or
PDU set size measurement.

It is understandable that the second network device may also perform other QoS measurements related to the PDU set to obtain the QoS measurement result of the PDU set, such that the first network device processes the PDU set based on the measurement result. The content of performing the specific QoS measurement is not limited herein in the present disclosure.

In some implementations, the second network device performs delay measurement, and the QoS measurement result may be a remaining delay budget, capable of indicating a remaining time for communication of the PDU set or the PDU.

In some embodiments, the second network device performs the delay measurement, and the QoS measurement result may be delay budget indication information, capable of indicating a relationship between a remaining time for communication of the PDU set or the PDU and a predetermined threshold value (for example, may indicating that the remaining time is higher than the predetermined threshold value, or less than the predetermined threshold value, or not less than the predetermined threshold value, or not higher than the predetermined threshold value, etc.).

In some implementations, the second network device performs error rate measurement, and the QoS measurement result may be an error rate for communication of the PDU set.

In some embodiments, the second network device performs the error rate measurement, and the QoS measurement result may be error rate indication information, capable of indicating a relationship between an error rate for communication of the PDU set and a predetermined threshold value (for example, may indicating that the error rate is higher than the predetermined threshold value, or less than the predetermined threshold value, or not less than the predetermined threshold value, or not higher than the predetermined threshold value, etc.).

In some implementations, the second network device performs PDU set size measurement, and the QoS measurement result may be a PDU set size.

In some embodiments, the second network device performs the PDU set size measurement, and the QoS measurement result may be PDU set size indication information, capable of indicating a relationship between a PDU set size and a predetermined threshold value (for example, may indicating that the PDU set size is higher than the predetermined threshold value, or less than the predetermined threshold value, or not less than the predetermined threshold value, or not higher than the predetermined threshold value, etc.).

It should be noted that the PDU set size may refer to a sum of sizes of all PDUs included in one PDU set. Or the PDU set size may also refer to a sum of sizes of a first received PDU to a currently received PDU in the PDU set.

It is understandable that the predetermined threshold values in the above-mentioned implementations may be set as different values according to different implementations and specific application scenarios, which will not be limited in the present disclosure.

Further, the QoS information may be included in a DL USER DATA frame, or the QoS information may also be included in a DL DATA DELIVERY STATUS frame.

In some implementations, the QoS measurement result is obtained by the second network device performing QoS measurement related to the PDU set based on a QoS parameter sent by a third network device.

As a possible implementation, the third network device may be a gNB-CU-CP, the second network device may be a gNB-CU-UP, and the QoS parameter may be included in an E1AP message.

As another possible implementation, the third network device may be a core network node (for example, may be a UPF), the second network device may be a gNB-CU-UP or a base station (for example, may be a NG-RAN node), and the QoS parameter may be included in a GTP-U packet header.

For example, the QoS parameter includes error rate information related to the PDU set and/or delay budget information related to the PDU set.

For example, the error rate information related to the PDU set may include a PSER, and the delay budget information related to the PDU set may include a PSDB.

It is understandable that the error rate information and the delay budget information may also use other measurement parameters, and the QoS parameter may also include other parameters (such as PSII, etc.), such that the first network device supports processing the PDU set. The content included in the QoS parameter is not limited in the disclosure.

For example, there may be a correspondence between the QoS information and at least one of the following items: a PDU set; a type of the PDU set; a PDU; importance or priority of the PDU set; a QoS flow; or a sub-QoS flow.

At step 403, a PDU set associated with the QoS information and/or a PDU within the PDU set are processed according to the QoS information.

In an embodiment of the present disclosure, the first network device can process the PDU set associated with the QoS information and/or the PDU within the PDU set according to the received QoS information.

In an embodiment of the present disclosure, the processing of the PDU set and/or the PDU by the first network device includes: scheduling and/or performing resource configuration on the PDU set and/or the PDU.

In some implementations, the first network device can receive a PDU sent by a fourth network device and process the PDU. The PDU belongs to the PDU set associated with the QoS information.

For example, the PDU sent by the fourth network device includes first indication information, and the first indication information may be configured to indicate at least one of the following information:
a type of the PDU set;
a sequence number of the PDU in the PDU set; or
an end marker of the PDU set.

In summary, the QoS measurement request is sent to the second network device, and the QoS information sent by the second network device is received, in which, the QoS information is determined based on the QoS measurement result obtained by the second network device performing the QoS measurement related to the PDU set, and the PDU set associated with the QoS information and/or the PDU within the PDU set are processed according to the QoS information, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

Referring to FIG. 5, FIG. 5 is a flow chart illustrating a method for processing a PDU according to an embodiment of the disclosure. It should be noted that the method for processing a PDU in embodiments of the disclosure is performed by a first network device. The method may be performed independently or may be performed in conjunction with any other embodiments of the disclosure. As shown in FIG. 5, the method may include the following steps.

At step 501, QoS information sent by a second network device is received, in which, the QoS information includes a QoS parameter.

In an embodiment of the present disclosure, the first network device can receive the QoS information sent by the second network device, and the QoS information includes the QoS parameter. There is an association between the QoS information and a PDU set to be processed by the first network device.

For example, there may be a correspondence between the QoS parameter and at least one of the following items:
a PDU set;
a type of the PDU set;
a PDU in the PDU set;
importance or priority of the PDU set;
a QoS flow; or
a sub-QoS flow.

That is, each PDU set may correspond to its respective QoS parameter, or a type of each PDU set may correspond to its respective QoS parameter, or each PDU may correspond to its respective QoS parameter, or importance or priority of each PDU set may correspond to its respective QoS parameter, or each QoS flow or each sub-QoS flow may correspond to its respective QoS parameter, etc.

In some implementations, each QoS flow may correspond to its respective QoS information, that is, the QoS information is provided as per QoS flow, and one QoS flow may include a plurality of types of PDU sets.

In some implementations, each sub-QoS flow may correspond to its respective QoS information, that is, the QoS information is provided as per sub-QoS flow, and one QoS flow may include a plurality of sub-QoS flows, and each sub-QoS flow corresponds to one type of PDU set.

For example, the type of the PDU set may be a frame type (such as an intra-coded frame namely I frame, a forward predictive-coded frame namely P frame, etc.), or may be a service type, or may be other PDU set types, etc., which is not limited herein in the disclosure.

For example, the QoS parameter includes error rate information related to the PDU set and/or delay budget information related to the PDU set.

For example, the error rate information related to the PDU set may include a PSER, and the delay budget information related to the PDU set may include a PSDB.

It is understandable that the error rate information and the delay budget information may also use other measurement parameters, and the QoS parameter may also include other parameters (such as PSII, etc.), such that the first network device supports processing the PDU set. The content included in the QoS parameter is not limited in the disclosure.

It should be noted that the PSII is configured to indicate whether all PDUs in the PDU set are needed for the usage of PDU set by an application layer.

As an example, the QoS information corresponds to the importance of the PDU set (PDU set importance), that is, different QoS parameters may be set for different PDU set importance. For example, for importance 0 (PDU set importance 0), a QoS parameter corresponding to the importance 0 may include PSER (PDU set error rate), which, for example, may be 5%, PSDB (PDU set delay budget), which, for example, may be 10ms, and PSII (PDU set integrated indication), which, for example, may be a value of 1. It is understandable that the above embodiments are only given as examples and are not taken as a limitation on the QoS parameter in embodiments of the present disclosure. The QoS parameter may be flexibly set according to an actual application situation, which will not be limited in the present disclosure.

At step 502, a PDU set associated with the QoS information and/or a PDU within the PDU set are processed according to the QoS information.

In an embodiment of the present disclosure, the first network device can process the PDU set associated with the QoS parameter and/or the PDU within the PDU set according to the received QoS parameter.

In an embodiment of the present disclosure, the processing of the PDU set and/or the PDU by the first network device includes: scheduling and/or performing resource configuration on the PDU set and/or the PDU.

In some implementations, the first network device can receive a PDU sent by a fourth network device and process the PDU. The PDU belongs to the PDU set associated with the QoS parameter.

For example, the PDU sent by the fourth network device includes first indication information, and the first indication information may be configured to indicate at least one of the following information:
a type of the PDU set;
a sequence number of the PDU in the PDU set; or
an end marker of the PDU set.

In summary, the QoS information sent by the second network device is received, in which, the QoS information is the QoS parameter, and the PDU set associated with the QoS information and/or the PDU within the PDU set are processed according to the QoS information, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

Referring to FIG. 6, FIG. 6 is a flow chart illustrating a method for processing a PDU according to an embodiment of the disclosure. It should be noted that the method for processing a PDU in embodiments of the disclosure is performed by a second network device. The method may be performed independently or may be performed in conjunction with any other embodiments of the disclosure. As shown in FIG. 6, the method may include the following steps.

At step 601, QoS information is sent to a first network device. An association between the QoS information and a PDU set is present. The QoS information is configured for the first network device to process, according to the QoS information, a PDU set associated with the QoS information and/or a PDU within the PDU set.

In an embodiment of the present disclosure, the second network device can send the QoS information to the first network device, and there is an association between the QoS information and a PDU set to be processed by the first network device. The first network device can process, according to the QoS information, the PDU set associated with the QoS information and/or the PDU within the PDU set.

For example, there may be a correspondence between the QoS information and at least one of the following items:
a PDU set;
a type of the PDU set;
a PDU in the PDU set;
importance or priority of the PDU set;
a QoS flow; or
a sub-QoS flow.

That is, each PDU set may correspond to its respective QoS information, or each type of the PDU set may correspond to its respective QoS information, or each PDU may correspond to its respective QoS information, or importance or priority of each PDU set may correspond to its respective QoS information, or each QoS flow or each sub-QoS flow may correspond to its respective QoS information, etc.

In some implementations, each QoS flow may correspond to its respective QoS information, that is, the QoS information is provided as per QoS flow, and one QoS flow may include a plurality of types of PDU sets.

In some implementations, each sub-QoS flow may correspond to its respective QoS information, that is, the QoS information is provided as per sub-QoS flow, and one QoS flow may include a plurality of sub-QoS flows, and each sub-QoS flow corresponds to one type of PDU set.

For example, the type of the PDU set may be a frame type (such as an intra-coded frame namely I frame, a forward predictive-coded frame namely P frame, etc.), or may be a service type, or may be other PDU set types, etc., which is not limited herein in the disclosure.

In an embodiment of the present disclosure, the QoS information sent by the second network device to the first network device is communicated based on a user plane protocol and/or a control plane protocol.

The QoS information communicated based on the user plane protocol is determined based on a QoS measurement result obtained by the second network device performing QoS measurement related to the PDU set. The QoS information communicated based on the control plane protocol may be a QoS parameter.

As a possible implementation, the first network device may be a gNB-DU, the second network device may be a gNB-CU-UP, and the QoS information may be included in an NR user plane protocol frame sent by the gNB-CU-UP (second network device) to the gNB-DU (first network device).

As another possible implementation, the first network device may be the gNB-CU-UP, the second network device may be the gNB-DU, and the QoS information may be included in an NR user plane protocol frame sent by the gNB-DU (second network device) to the gNB-CU-UP (first network device).

As another possible implementation, the first network device may be the gNB-DU, the second network device may be a gNB-CU or a gNB-CU-CP, and the QoS information may be included in an F1AP message sent by the gNB-CU or the gNB-CU-CP (second network device) to the gNB-DU (first network device).

As another possible implementation, the first network device may be the gNB-CU-UP, the second network device may be the gNB-CU-CP, and the QoS information is included in an E1AP message sent by the gNB-CU-CP (second network device) to the gNB-CU-UP (first network device).

As another possible implementation, the first network device may be an SN, the second network device may be an MN, and the QoS information may be included in an XnAP message sent by the MN (second network device) to the SN (first network device).

As another possible implementation, the first network device may be the MN, the second network device may be the SN, and the QoS information may be included in an XnAP message sent by the SN (second network device) to the MN (first network device).

As another possible implementation, the first network device may be a destination base station during a handover procedure, and the second network device may be a source base station during the handover procedure. The QoS information is included in an XnAP message (for example, a handover request message) sent by the source base station (second network device) to the destination base station (first network device).

As another possible implementation, the first network device may be a base station, the second network device may be a core network node, and the QoS information is included in an NGAP message or a GTP-U packet header sent by the core network node (second network device) to the base station (first network device).

In some implementations, the QoS information is communicated based on the user plane protocol, and the QoS information is determined based on the QoS measurement result obtained by the second network device performing the QoS measurement related to the PDU set.

For example, the QoS measurement related to the PDU set may include at least one of:
delay measurement;
error rate measurement; or
PDU set size measurement.

It is understandable that the second network device may also perform other QoS measurements related to the PDU set to obtain the QoS measurement result of the PDU set, such that the first network device processes the PDU set based on the measurement result. The content of performing the specific QoS measurement is not limited herein in the present disclosure.

Further, in some implementations, the second network device may receive a QoS measurement request sent by the first network device. The QoS measurement request includes at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

For example, the predetermined condition may include that the QoS measurement result is higher than the first threshold value; or the predetermined condition may include that the QoS measurement result is equal to the first threshold value; or the predetermined condition may include that the QoS measurement result is less than the first threshold value.

For example, the first threshold value includes at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

It is understandable that the delay measurement result meeting the predetermined condition means that a comparison relationship between the delay measurement result and the first delay threshold value meets the predetermined condition. For example, the delay measurement result meeting the predetermined condition may include that the delay measurement result is higher than the first delay threshold value; or the delay measurement result meeting the predetermined condition may include that the delay measurement result is equal to the first delay threshold value; or the delay measurement result meeting the predetermined condition may include that the delay measurement result is less than the first delay threshold value.

Similarly, the error rate measurement result meeting the predetermined condition means that a comparison relationship between the error rate measurement result and the first error rate threshold value meets the predetermined condition. For example, the error rate measurement result meeting the predetermined condition may include that the error rate measurement result is higher than the first error rate threshold value; or the error rate measurement result meeting the predetermined condition may include that the error rate measurement result is equal to the first error rate threshold value; the error rate measurement result meeting the predetermined condition may include that the error rate measurement result is less than the first error rate threshold value.

The PDU set size measurement result meeting the predetermined condition means that a comparison relationship between the PDU set size measurement result and the first capacity threshold value meets the predetermined condition. For example, the PDU set size measurement result meeting the predetermined condition may include that the PDU set size measurement result is higher than the first capacity threshold value; or the PDU set size measurement result meeting the predetermined condition may include that the PDU set size measurement result is equal to the first capacity threshold value; or the PDU set size measurement result meeting the predetermined condition may include that the PDU set size measurement result is less than the first capacity threshold value.

In some implementations, the second network device may further receive a QoS parameter sent by a third network device, and perform QoS measurement related to the PDU set based on the QoS parameter. The QoS measurement result is obtained by the second network device performing the QoS measurement based on the QoS parameter sent by the third network device.

As a possible implementation, the third network device may be a gNB-CU-CP, the second network device may be a gNB-CU-UP, and the QoS parameter may be included in an E1AP message.

As another possible implementation, the third network device may be a core network node (for example, may be a UPF), the second network device may be a gNB-CU-UP or a base station (for example, may be a NG-RAN node), and the QoS parameter may be included in a GTP-U packet header.

In some implementations, the QoS information is communicated based on the control plane protocol, and the QoS information may be a QoS parameter.

For example, the QoS parameter includes error rate information related to the PDU set and/or delay budget information related to the PDU set.

For example, the error rate information related to the PDU set may include a PDU set error rate (PSER), and the delay budget information related to the PDU set may include a PDU set delay budget (PSDB).

It is noted that the PSER mentioned in embodiments of the present disclosure defines an upper limit of a ratio of the number of PDU sets that are not successfully received to the total number of PDU sets sent to a receiver within one measurement window. The PSDB defines an upper limit of a delay of one PDU set communicated between N6 termination points on the UE and the UPF, that is, a time from receiving the first PDU to successfully delivering the last arriving PDU.

It is understandable that the error rate information and the delay budget information may also use other measurement parameters, and the QoS parameter may also include other parameters (such as PDU set integrated indication (PSII), etc.), such that the first network device supports processing the PDU set. The content included in the QoS parameter is not limited in the disclosure.

It should be noted that the PSII is configured to indicate whether all PDUs in the PDU set are needed for the usage of PDU set by an application layer.

In summary, the QoS information is sent to the first network device, in which, the association between the QoS information and the PDU set is present, and the QoS information is configured for the first network device to process the PDU set associated with the QoS information and/or the PDU within the PDU set, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

Corresponding to the method for processing a PDU provided in the several embodiments described above, the disclosure also provides an apparatus for processing a PDU. Since the apparatus for processing a PDU provided in the embodiments of the disclosure corresponds to the method provided in the several embodiments described above, implementation of the method for processing a PDU is also applicable to the apparatus for processing a PDU provided in the following embodiments, which will not be described in detail in the following embodiments.

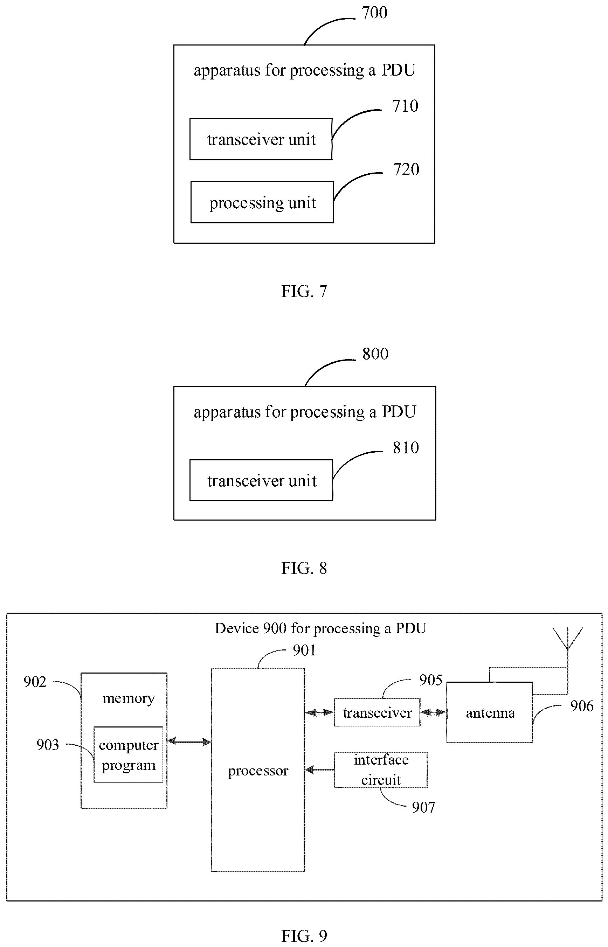

Referring to FIG. 7, FIG. 7 is a block diagram illustrating an apparatus for processing a PDU provided in an embodiment of the disclosure.

As shown in FIG. 7, the apparatus 700 for processing a PDU includes a transceiver unit 710 and a processing unit 720.

The transceiver unit 710 is configured to receive QoS information sent by a second network device, in which, an association between the QoS information and a PDU set is present.

The processing unit 720 is configured to process, according to the QoS information, a PDU set associated with the QoS information and/or a PDU within the PDU set associated with the QoS information.

As an example, the QoS information is communicated based on a user plane protocol and/or a control plane protocol.

As an example, the QoS information is communicated based on the user plane protocol, and the QoS information is determined based on a QoS measurement result obtained by the second network device performing QoS measurement related to the PDU set.

As an example, the transceiver unit 710 is further configured to send a QoS measurement request to the second network device;
in which, the QoS measurement request includes at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

As an example, the first threshold value includes at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

As an example, the QoS measurement result is obtained by the second network device performing QoS measurement based on a QoS parameter sent by a third network device.

As an example, the QoS information is communicated based on the control plane protocol, and the QoS information comprises a QoS parameter.

As an example, the transceiver unit 710 is further configured to receive a PDU sent by a fourth network device, in which, the PDU belongs to the PDU set.

As an example, the PDU includes first indication information, and the first indication information indicates at least one of the following information:
a type of the PDU set;
a sequence number of the PDU in the PDU set; or
an end marker of the PDU set.

As an example, the QoS parameter includes error rate information related to the PDU set and/or delay budget information related to the PDU set.

As an example, a correspondence between the QoS information and at least one of the following items is present:
a PDU set;
a type of the PDU set;
a PDU in the PDU set;
importance or priority of the PDU set;
a QoS flow; or
a sub-QoS flow.

As an example, the processing unit 720 is specifically configured to: schedule the PDU set associated with the QoS information and/or the PDU within the PDU set; and/or perform resource configuration on the PDU set associated with the QoS information and/or the PDU within the PDU set.

An embodiment provides the apparatus for processing the PDU. The QoS information sent by the second network device is received, in which, the association between the QoS information and the PDU set is present, and the PDU set associated with the QoS information and/or the PDU within the PDU set are processed according to the QoS information, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

Referring to FIG. 8, FIG. 8 is a block diagram illustrating an apparatus for processing a PDU provided in an embodiment of the disclosure.

As shown in FIG. 8, the apparatus 800 for processing a PDU includes a transceiver unit 810.

The transceiver unit 810 is configured to send QoS information to a first network device, in which, an association between the QoS information and a PDU set is present, and the QoS information is configured for the first network device to process, according to the QoS information, a PDU set associated with the QoS information and/or a PDU within the PDU set associated with the QoS information.

As an example, the QoS information is communicated based on a user plane protocol and/or a control plane protocol.

As an example, the QoS information is communicated based on the user plane protocol, and the QoS information is determined based on a QoS measurement result obtained by the second network device performing QoS measurement related to the PDU set.

As an example, the transceiver unit 810 is further configured to: receive a QoS measurement request sent by the first network device;
in which, the QoS measurement request includes at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

As an example, the first threshold value includes at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

As an example, the QoS measurement result is obtained by the second network device performing QoS measurement based on a QoS parameter sent by a third network device.

As an example, the QoS information is communicated based on the control plane protocol, and the QoS information includes a QoS parameter.

As an example, the QoS parameter includes error rate information related to the PDU set and/or delay budget information related to the PDU set.

As an example, a correspondence between the QoS information and at least one of the following items is present:
a PDU set;
a type of the PDU set;
a PDU in the PDU set;
importance or priority of the PDU set;
a QoS flow; or
a sub-QoS flow.

An embodiment provides the apparatus for processing the PDU. The QoS information is sent to the first network device, in which, the association between the QoS information and the PDU set is present, and the QoS information is configured for the first network device to process the PDU set associated with the QoS information and/or the PDU within the PDU set, such that the first network device can support QoS processing of the PDU set in a wireless access network with a non-separated architecture or a separated architecture, or in a DC scenario. The method of the present disclosure can regulate network traffic, avoid and manage network congestion, reduce a packet loss rate, and effectively improve reliability of system communications, and improve user experience.

To implement the above embodiments, embodiments of the disclosure further provide a communication device. The communication device includes a processor and a memory, in which the memory stores a computer program, which, when executed by the processor, causes the device to implement the method illustrated in FIG. 2 to FIG. 5.

To implement the above embodiments, embodiments of the disclosure further provide a communication device. The communication device includes a processor and a memory, in which the memory stores a computer program, which, when executed by the processor, causes the device to implement the method illustrated in FIG. 6.

To implement the above embodiments, embodiments of the disclosure further provide a communication device. The communication device includes a processor and an interface circuit; in which the interface circuit is configured to receive code instructions and transmit the code instructions to the processor; and the processor is configured to execute the code instructions to implement the method illustrated in FIG. 2 to FIG. 5.

To implement the above embodiments, embodiments of the disclosure further provide a communication device. The communication device includes a processor and an interface circuit; in which the interface circuit is configured to receive code instructions and transmit the code instructions to the processor; and the processor is configured to execute the code instructions to implement the method illustrated in FIG. 6.

FIG. 9 is a block diagram illustrating another device for processing a PDU provided in embodiments of the disclosure. The device 900 for processing a PDU may be a network device, or may be a terminal, or may be a chip, a system on chip or a processor that supports the network device to implement the method, or may be a chip, a system on chip or a processor that supports the terminal to implement the method. The device may be used to realize the methods described in the above method embodiments with reference to the descriptions of the above-described method embodiments.

The device 900 may include one or more processors 901. The processor 901 may be a general purpose processor or a dedicated processor. For example, the processor 901 may be a baseband processor or a central processor. The baseband processor may be configured to process a communication protocol and communication data, and the central processor may be configured to control the device 900 for processing a PDU (e.g., a base station, a baseband chip, a terminal, a terminal chip, a DU or CU, etc.), to execute a computer program, and process data of the computer program.

In an embodiment, the device 900 may further include one or more memories 902 with a computer program 903 stored thereon. The processor 901 executes the computer program 903 so that the device 900 for processing a PDU performs the method as described in the above method embodiments. The computer program 903 may be solidified in the processor 901, in which case the processor 901 may be implemented by a hardware.

In an embodiment, the memory 902 may further store data. The device 900 for processing a PDU and the memory 902 may be independently configured or integrated together.

In an embodiment, the device 900 for processing a PDU may further include a transceiver 905 and an antenna 906. The transceiver 905 may be referred to as a transceiver unit, a transceiver machine or a transceiver circuit, which may be configured to achieve a transceiving function. The transceiver 905 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

In an embodiment, the device 900 for processing a PDU may further include one or more interface circuits 907. The interface circuit 907 is configured to receive code instructions and transmit the code instructions to the processor 901. The processor 901 runs the code instructions so that the device 900 for processing a PDU performs the method according to the above method embodiment.

In an implementation, the processor 901 may include a transceiver configured to implement receiving and transmitting functions. For example, the transceiver may be a transceiver circuit, or an interface, or an interface circuit. The transceiver circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the device 900 for processing a PDU may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The device for processing a PDU described in the above embodiments may be a network device or a terminal, but the scope of the device for processing a PDU described in the disclosure is not limited thereto, and a structure of the device for processing a PDU may not be subject to FIG. 7 to FIG. 8. The device for processing a PDU may be a stand-alone device or may be a part of a larger device. For example, the device for processing a PDU may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

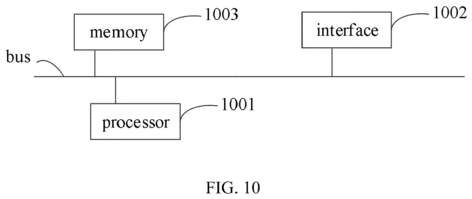

In the case that the device for processing a PDU may be a chip or a system on chip, please refer to FIG. 10. FIG. 10 is a block diagram illustrating a chip according to an embodiment of the disclosure. The chip illustrated in FIG. 10 includes a processor 1001 and an interface 1002, in which the number of processors 1001 may be one or more and the number of interfaces 1002 may be more than one.

For the case where the chip is used to implement the functionality of a first network device in embodiments of the disclosure: the interface 1002 is configured for receiving code instructions and sending the code instructions to the processor; the processor 1001 is configured for running the code instructions to perform the method in FIG. 2 to FIG. 5.

For the case where the chip is used to implement the functionality of a second network device in embodiments of the disclosure: the interface 1002 is configured for receiving code instructions and sending the code instructions to said processor; the processor 1001 is configured for running the code instructions to perform the method in FIG. 6.

In an embodiment, the chip further includes a memory 1003, configured to save necessary computer program and data.

Those skilled in the related art may understand that, various illustrative logical blocks and steps listed in embodiments of the disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

Embodiments of the disclosure also provide a communication system. The system includes a device for processing a PDU serving as a network device in embodiments of FIG. 7 to FIG. 8. Alternatively, the system includes the device for processing a PDU serving as a network device in embodiments of FIG. 9.

A readable storage medium with instructions stored thereon is further provided in the disclosure. When the instructions are executed by a computer, functions in any method embodiment as described above are implemented.

A computer program product is further provided in the disclosure. The computer program product implements functions of any method embodiment as described above when executed by a computer.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by an electronic hardware or a combination of an electronic hardware and a computer software. Whether the functions are executed by the hardware or the software depends on a specific application and a design constraint of the technical solution. Those skilled in the art may use different methods for each specific application to implement the described functions, but such implementation should not be considered beyond the scope of the disclosure.

Those skilled in the art may clearly understand that, a specific working process of a system, an apparatus and a unit described above may refer to a corresponding process in the above method embodiments, which will not be repeated here.

It should be understood that the various forms of processes shown above can be used to reorder, add or delete steps. For example, the steps described in embodiments of the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for processing a protocol data unit (PDU), performed by a first network device, comprising:
receiving quality of service (QoS) information sent by a second network device, wherein an association between the QoS information and a PDU set is present; and
processing, according to the QoS information, the PDU set associated with the QoS information and/or a PDU within the PDU set associated with the QoS information.

2. The method according to claim 1, wherein the QoS information is communicated based on a user plane protocol and/or a control plane protocol.

3. The method according to claim 2, wherein the QoS information is communicated based on the user plane protocol, and the QoS information is determined based on a QoS measurement result obtained by the second network device performing QoS measurement related to the PDU set.

4. The method according to claim 3, further comprising:
sending a QoS measurement request to the second network device;
wherein the QoS measurement request comprises at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

5. The method according to claim 4, wherein the first threshold value comprises at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

6. The method according to claim 3, wherein the QoS measurement result is obtained by the second network device performing QoS measurement based on a QoS parameter sent by a third network device.

7. The method according to claim 2, wherein the QoS information is communicated based on the control plane protocol, and the QoS information comprises a QoS parameter.

8. The method according to any one of claims 1 to 7, further comprising:
receiving a PDU sent by a fourth network device, wherein the PDU belongs to the PDU set.

9. The method according to claim 8, wherein the PDU comprises first indication information, and the first indication information indicates at least one of the following information:
a type of the PDU set;
a sequence number of the PDU in the PDU set; or
an end marker of the PDU set.

10. The method according to claim 6 or 7, wherein the QoS parameter comprises error rate information related to the PDU set and/or delay budget information related to the PDU set.

11. The method according to any one of claims 1 to 10, wherein a correspondence between the QoS information and at least one of the following items is present:
a PDU set;
a type of the PDU set;
a PDU in the PDU set;
importance or priority of the PDU set;
a QoS flow; or
a sub-QoS flow.

12. The method according to any one of claims 1 to 10, wherein processing the PDU set associated with the QoS information and/or the PDU within the PDU set associated with the QoS information comprises:
scheduling the PDU set associated with the QoS information and/or the PDU within the PDU set; and/or,
performing resource configuration on the PDU set associated with the QoS information and/or the PDU within the PDU set.

13. A method for processing a protocol data unit (PDU), performed by a second network device, comprising:
sending quality of service (QoS) information to a first network device, wherein an association between the QoS information and a PDU set is present;
wherein the QoS information is configured for the first network device to process, according to the QoS information, a PDU set associated with the QoS information and/or a PDU within the PDU set associated with the QoS information.

14. The method according to claim 13, wherein the QoS information is communicated based on a user plane protocol and/or a control plane protocol.

15. The method according to claim 14, wherein the QoS information is communicated based on the user plane protocol, and the QoS information is determined based on a QoS measurement result obtained by the second network device performing QoS measurement related to the PDU set.

16. The method according to claim 15, further comprising:
receiving a QoS measurement request sent by the first network device;
wherein the QoS measurement request comprises at least one of:
measurement indication information, configured to indicate performing the QoS measurement related to the PDU set;
a QoS measurement content, configured to indicate a content of the QoS measurement related to the PDU set;
report indication information, configured to indicate sending the QoS measurement result to the first network device; or
a first threshold value, indicating that the QoS measurement result is sent to the first network device in a case where a predetermined condition is met.

17. The method according to claim 16, wherein the first threshold value comprises at least one of:
a first delay threshold value, indicating that the QoS measurement result is sent to the first network device in a case where a delay measurement result meets the predetermined condition;
a first error rate threshold value, indicating that the QoS measurement result is sent to the first network device in a case where an error rate measurement result meets the predetermined condition; or
a first capacity threshold value, indicating that the QoS measurement result is sent to the first network device in a case where a PDU set size measurement result meets the predetermined condition.

18. The method according to claim 15, wherein the QoS measurement result is obtained by the second network device performing QoS measurement based on a QoS parameter sent by a third network device.

19. The method according to claim 14, wherein the QoS information is communicated based on the control plane protocol, and the QoS information comprises a QoS parameter.

20. The method according to claim 18 or 19, wherein the QoS parameter comprises error rate information related to the PDU set and/or delay budget information related to the PDU set.

21. The method according to any one of claims 13 to 20, wherein a correspondence between the QoS information and at least one of the following items is present:
a PDU set;
a type of the PDU set;
a PDU in the PDU set;
importance or priority of the PDU set;
a QoS flow; or
a sub-QoS flow.

22. An apparatus for processing a protocol data unit (PDU), applied to a first network device, comprising:
a transceiver unit, configured to receive quality of service (QoS) information sent by a second network device, wherein an association between the QoS information and a PDU set is present; and
a processing unit, configured to process, according to the QoS information, a PDU set associated with the QoS information and/or a PDU within the PDU set associated with the QoS information.

23. An apparatus for processing a protocol data unit (PDU), applied to a second network device, comprising:
a transceiver unit, configured to send quality of service (QoS) information to a first network device, wherein an association between the QoS information and a PDU set is present;
wherein the QoS information is configured for the first network device to process, according to the QoS information, a PDU set associated with the QoS information and/or a PDU within the PDU set associated with the QoS information.

24. A communication device, comprising a processor and a memory, wherein the memory stores a computer program, which, when executed by the processor, cause the device to implement the method according to any one of claims 1 to 12.

25. A communication device, comprising a processor and a memory, wherein the memory stores a computer program, which, when executed by the processor, cause the device to implement the method according to any one of claims 13 to 21.

26. A communication device, comprising: a processor and an interface circuit; wherein
the interface circuit is configured to receive code instructions and transmit the code instructions to the processor; and
the processor is configured to execute the code instructions to implement the method according to any one of claims 1 to 12.

27. A communication device, comprising: a processor and an interface circuit; wherein
the interface circuit is configured to receive code instructions and transmit the code instructions to the processor; and
the processor is configured to execute the code instructions to implement the method according to any one of claims 13 to 21.

28. A computer-readable storage medium, configured to store instructions, wherein when the instructions are executed, the method according to any one of claims 1 to 12 is implemented.

29. A computer-readable storage medium, configured to store instructions, wherein when the instructions are executed, the method according to any one of claims 13 to 21 is implemented.

30. A communication system, comprising:
a first network device, configured to perform a method according to any one of claims 1 to 12; and
a second network device, configured to perform a method according to any one of claims 13 to 21.
